# FASCICULE DE BREVET EUROPEEN

(11) **EP 1 188 121 B1**
(45) Date de publication et mention de la délivrance du brevet: **11.08.2010**
(21) Numéro de dépôt: 99973909.7
(22) Date de dépôt: 16.06.1999
(51) Int. Cl.: G06F 13/40, H04N 5/00, H04N 5/44

(54) **DISPOSITIF ET PROCÉDÉ ASSOCIÉ POUR GÉRER AUTOMATIQUEMENT LES FLUX DE DONNÉES NUMÉRIQUES D'UN HÔTE ENTRE L'INTERFACE COMMUNE ET LES MODULES ASSOCIÉS**
VORRICHTUNG UND VERFAHREN ZUR AUTOMATISCHEN VERWALTUNG DIGITALER DATENSTRÖME EINES RECHNERS ZWISCHEN EINER GEMEINSAMEN SCHNITTSTELLENEINRICHTUNG UND DEN DAMIT VERBUNDENEN MODULEN
DEVICE AND METHOD FOR MANAGING AUTOMATICALLY THE FLOW OF DIGITAL DATA OF A HOST BETWEEN A COMMON INTERFACE AND ITS ASSOCIATED MODULES

(43) Date de publication de la demande: 20.03.2002
(73) Titulaire: SmarDTV S.A., 1033 Cheseaux-sur-Lausanne (CH)
(72) Inventeur: GUENEBAUD, P, Office Méditer. de Brevets d'Invt., 06000 Nice (FR); LEROUX, J, Office Méditer. de Brevets d'Invt., 06000 Nice (FR)
(74) Mandataire: Leman Consulting S.A.
(86) Numéro de dépôt international: PCT/FR1999/001447
(87) Numéro de publication internationale: WO 2000/077650

(56) Documents cités:
- EP-A- 0 668 566
- EP-A2- 0 912 057
- WO-A-93/15464
- FR-A- 2 597 688
- FR-A- 2 776 092
- US-A- 4 683 550
- US-A- 5 349 343
- CUTTS D J: "DVB CONDITIONAL ACCESS" ELECTRONICS AND COMMUNICATION ENGINEERING JOURNAL, INSTITUTION OF ELECTRICAL ENGINEERS, LONDON, GB, vol. 9, no. 1, February 1997 (1997-02), pages 21-27, XP000722905 ISSN: 0954-0695

## Description

L'invention a pour objet un dispositif pour gérer automatiquement, l'aiguillage du flux de données numériques d'un hôte à interface commune utilisant au minimum deux connecteurs pour modules.

Les modules peuvent être du type (PCCARD ou DVB-CI).

L'hôte peut être par exemple un décodeur, une télévision numérique, une carte embarquée dans un ordinateur, chaque hôte pouvant être connecté à un ou plusieurs réseaux (satellite, câble ou hertzien).

L'invention a pour objet un dispositif et son procédé pour gérer automatiquement le flux et reconnaître le niveau de priorité d'un module inséré indifféremment dans un des connecteurs d'un appareil électronique dit hôte.

Un receveur ou hôte universel utilisant deux modules (ou plus) ne permet pas d'utiliser de la même façon un module inséré dans le slot A ou connecteur A et un module B dans le slot ou connecteur B. En effet les emplacements des connecteurs A et B correspondant aux deux modules A et B ne sont pas indifférenciés. Il est impératif selon l'état de la technique que le module A soit mis en place dans le connecteur A et que le module B soit mis en place dans le connecteur B.

Le flux provenant du démodulateur entre dans le premier module A s'il est présent sinon un interrupteur numérique commandé va permettre au flux de rester dans le décodeur par un moyen faisant office de dérivation. Si le premier module A est en place, le flux entre dans le second module B s'il est présent, sinon de la même manière il y aura un interrupteur numérique commandé qui permettra au flux de rester dans le décodeur par une dérivation. Après être passé dans le module B si celui ci est en place dans le connecteur B, le flux entre dans le démultiplexeur.

Un tel receveur est connu de EP 0 912 057. Le receveur permet d'aiguiller, ou non, le flux de données vers les modules dans un ordre pré-déterminé.

Par contre, si par erreur, l'utilisateur a mal inséré ces modules et que le module B a été mis en place dans le connecteur A, l'appareil peut être incapable de fonctionner.

L'invention a donc pour but de résoudre ce problème et permettre à tout utilisateur d'utiliser les « slots » ou les connecteurs de façon indifférenciée pour tous les modules que l'utilisateur veut utiliser et sans que celui-ci ait à réfléchir pour savoir quel est l'ordre d'introduction des modules et quel est leur emplacement exact.

La demande internationale WO 93/15464 et le brevet US 5,349,343 décrivent un fond de panier d'ordinateur comportant un ensemble de commutateurs permettant de relier entre eux les connecteurs de façon arbitraire sous le contrôle d'une unité extérieure. Le brevet US 5,349,343 permet aussi de contrôler les commutateurs en fonction d'informations reçus des modules placés dans le système.

A cet effet, le dispositif selon l'invention est du type utilisant dans un hôte, un démodulateur, un démultiplexeur, un pilote pour l'interface commune, un processeur, au moins deux connecteurs pour deux modules, des moyens de reconnaissance automatique des modules une fois qu'ils sont insérés dans chaque connecteur et des moyens de commande d'aiguillage qui

vont interchanger les cheminements du flux à l'intérieur de l'hôte et des modules.

De même entre le démodulateur et le démultiplexeur et le processeur est inséré un composant électronique (ASIC) nommé 6 ou tout autre système qui reconnaît automatiquement chaque module inséré dans son connecteur et permet d'interchanger le cheminement du flux.

Les dessins ci-joints sont donnés à titre d'exemples indicatifs et non limitatifs. Ils représentent un mode de réalisation selon l'invention. Ils permettront de comprendre aisément l'invention.

La figure 1 est un schéma mettant en évidence l'état de la technique dans un hôte du type actuel utilisant deux modules.

La figure 2 est un schéma mettant en évidence l'utilisation du dispositif et du procédé selon l'invention avec deux modules mis en place dans un hôte selon l'invention.

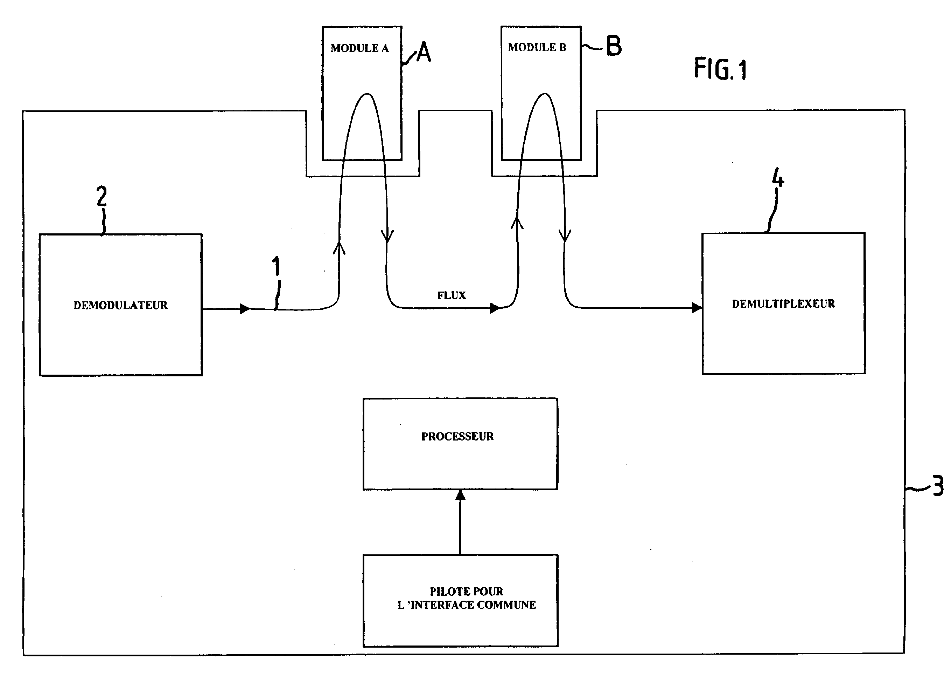

Selon l'état de la technique représenté à la figure 1, l'hôte 3 utilisant deux modules, module A et module B, le module A étant mis en place dans le connecteur A et le module B étant mis en place dans le connecteur B, il est évident, lorsque l'on considère le cheminement du flux 1, que lorsqu'un module n'a pas été mis à sa place dans le bon connecteur, que l'appareil électronique ne pourra pas fonctionner. En effet le flux 1 un provenant du démodulateur entre dans le premier module A qui est présent, puis il entre dans le module B s'il est présent et va entrer dans le démultiplexeur 4. Bien entendu, si un des modules n'est pas présent, un interrupteur numérique commandé va permettre au flux de rester dans le décodeur par un moyen de dérivation. Le flux entrera alors dans le second module s'il est présent puis entrera ensuite dans le démultiplexeur 4.

Selon l'hôte représenté à la figure 1, l'utilisation par exemple d'un module faisant office de tuner (récepteur de modulation de fréquence) n'est pas possible dans l'emplacement B ou connecteur si celui ci n'est pas dédié de manière explicite à un emplacement ou un connecteur de module faisant office de tuner.

En effet, le flux issu du module tuner ne pourra pas être décrypté si besoin dans le module A. L'introduction du module A et B, dans les connecteurs A et B doit donc respecter un ordre selon la nature des modules (contrôle d'accès, tuner, etc.). Ce choix demande donc en plus à l'utilisateur un niveau de connaissance technique élevé.

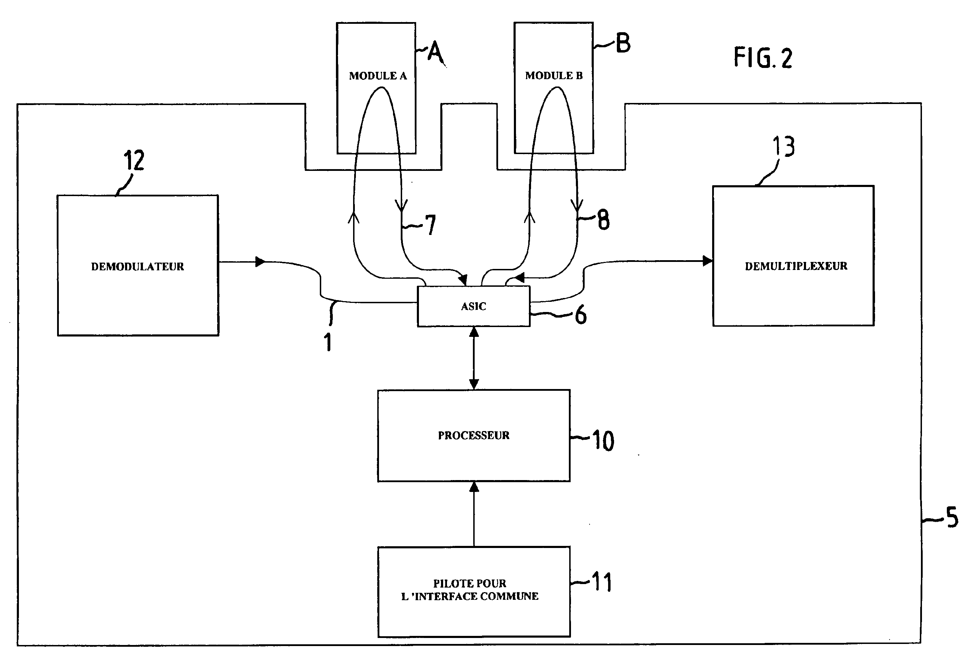

Le mode de réalisation représenté à la figure 2 utilise dans l'hôte 5 un composant électronique ASIC nommé 6 ou tout autre système qui va permettre la reconnaissance automatique de chaque module A et/ou B et va permettre en association avec de l'électronique multiplexeur d'interchanger le cheminement du flux 7 et 8 à l'intérieur de l'hôte et des modules A et B, avec un pilote pour l'interface commune 11. Ainsi le flux issu du démodulateur 12 va entrer dans le module A, le flux du module A va être immédiatement et automatiquement identifié au niveau du composant électronique (ASIC) ou tout autre système. De même, le flux du module B va être immédiatement et automatiquement identifié au niveau du composant électronique (ASIC) ou tout autre système qui, si nécessaire, interchange le cheminement du flux.

L'ensemble du flux peut retourner vers le démultiplexeur 13. Le composant électronique (ASIC) ou tout autre système 6 va donc identifier automatiquement dans l'hôte les modules quel que soit leur mise en place dans les connecteurs A ou B. Le composant électronique (ASIC) ou tout autre système 6 et le pilote pour l'interface commune vont déterminer un ordre de priorité du flux à l'intérieur des deux modules A et B, et ce, que ceux-ci soit placés dans le connecteur A ou dans le connecteur B.

Les connecteurs sont donc indifférenciés et interchangeables pour les modules.

Sur le plan pratique, l'utilisateur n'a plus aucun souci à se faire lorsqu'il insère les modules dans leur connecteur.

### REFERENCES

- 1.: FLUX
- 2.: DEMODULATEUR
- 3.: HOTE
- 4.: DEMULTIPLEXEUR
- 5.: HOTE
- 6.: COMPOSANT ELECTRONIQUE (ASIC ou tout autre système)
- 7.: CHEMINEMENT DU FLUX
- 8.: CHEMINEMENT DU FLUX
- 10.: PROCESSEUR
- 11.: PILOTE POUR L'INTERFACE COMMUNE
- 12.: DEMODULATEUR
- 13.: DEMULTIPLEXEUR
- A: MODULE A, CONNECTEUR A
- B: MODULE B, CONNECTEUR B

## Revendications

1. Dispositif pour gérer automatiquement les flux de données numériques d'un hôte constitué par un décodeur pour réception de télévision numérique de type à "interface commune" vers ses modules associés et comprenant un démodulateur (12), un démultiplexeur (13), un pilote pour l'interface commune (11), un processeur (10), au moins deux connecteurs (A, B) pour deux modules (A, B), des moyens de reconnaissance des modules, et des moyens d'aiguillage du flux de données, **caractérisé par le fait que** les moyens de reconnaissance et les moyens d'aiguillage sont formés par un composant électronique (ASIC) qui reconnaît automatiquement chaque module (A-B) inséré dans son connecteur (A-B), **par le fait que** ce composant électronique (ASIC) identifie automatiquement le flux destiné à chacun des modules, **par le fait que** ce composant électronique (ASIC) détermine un ordre de priorité du flux et **par le fait qu'**il interchange le cheminement du flux (1) dans les modules si nécessaire.

2. Dispositif, selon la revendication 1, **caractérisé par le fait que** ledit composant électronique est placé entre le démodulateur (12) et le démultiplexeur (13) et le processeur (10).

3. Procédé pour la mise en oeuvre du dispositif selon la revendication 1 pour gérer automatiquement les flux de données numériques d'un hôte constitué par un décodeur pour réception de télévision numérique de type à "interface commune" vers ses modules associés **caractérisé par le fait**
**qu'**il utilise des moyens de reconnaissance automatique de la nature des modules une fois qu'ils sont insérés dans chaque connecteur (A-B), qu'il utilise un composant électronique (ASIC) qui reconnaît automatiquement chaque module (A-B) inséré dans son connecteur (A-B), ce composant électronique (ASIC) identifiant automatiquement le flux destiné à chacun des modules et déterminant un ordre de priorité du flux, et qu'il utilise des moyens de commande d'aiguillage qui vont acheminer le flux (1) vers lesdits modules (A-B) et à l'intérieur de l'hôte (3) en interchangeant le cheminement du flux (1) dans les modules si nécessaire.

## Claims

1. Device for automatically managing digital data streams from a host made up of a decoder for receiving digital television data of the type with "common interface" towards its associated modules, and comprising a demodulator (12), a demultiplexer (13), a driver for the common interface (11), a processor (10), at least two connectors (A, B) for two modules (A, B), means for recognizing the modules and means for switching the data stream, **characterized in that** the means for recognizing and the means for switching are made up of an electronic component (ASIC) which automatically recognizes each module (A-B) inserted in its connector (A-B), **in that** the electronic component (ASIC) identifies automatically the stream intended for each of the modules, **in that** the electronic component (ASIC) determines a priority order of the stream and **in that** it interchanges the progression of the stream (1) in the modules if necessary.

2. Device according to claim 1, **characterized in that** said electronic component is placed between the demodulator (12) and the demultiplexer (13) and the processor (10).

3. Process for using the device according to claim 1 for managing automatically the streams of digital data from a host made up of a decoder for receiving digital television data of the type with "common interface" towards its associated modules, **characterized in that**
it uses means for automatically recognizing the nature of the modules once they are inserted in each connector (A-B), **in that** it uses an electronic component (ASIC) which automatically recognizes each module (A-B) inserted in its connector (A-B), this electronic component (ASIC) automatically identifying the stream intended for each of the modules and determining a priority order of the stream, and **in that** it uses switching command means which will forward the stream (1) towards said modules (A-B) and inside the host (3) by interchanging the progression of the stream (1) in the modules if necessary.

## Patentansprüche

1. Verfahren zum automatischen Verwalten von digitalen Datenströmen eines Hosts, der einen Decoder nach Art einer "Gemeinschaftsschnittstelle" zum Empfang von digitalem Fernsehen für seine zugeordneten Module aufweist und über einen Demodulator (12), über einen Demultiplexer (13), über eine Steuerung für die Gemeinschaftsschnittstelle (11), über einen Prozessor (10), über wenigstens zwei Anschlüsse (A, B) für zwei Module (A, B), über Modulerkennungsmittel und über Verteilermittel für den Datenfluss verfügt, **dadurch gekennzeichnet, dass** die Erkennungsmittel und die Verteilermittel durch ein elektronisches Bauelement (ASIC) gebildet sind, das automatisch jedes Modul (A-B) erkennt, das in seinen Anschluss (AB) eingefügt ist, dass das elektronische Bauelement (ASIC) automatisch den für jedes der Module bestimmten Strom identifiziert, dass das elektronische Bauelement (ASIC) für den Strom eine Prioritätenreihenfolge bestimmt und dass es, falls erforderlich, die Wegzuweisung des Stromes (1) innerhalb der Module abändert.

2. Vorrichtung nach Anspruch 1, **dadurch gekennzeichnet, dass** das elektronische Bauelement zwischen dem Demodulator (12) und dem Demultiplexer (13) und dem Prozessor (10) angeordnet ist.

3. Verfahren zum Betrieb der Vorrichtung nach Anspruch 1 zum automatischen Verwalten von digitalen Datenströmen eines Hosts, der durch einen Decoder zum Empfang von digitalem Fernsehen für seine zugeordneten Module nach Art einer "Gemeinschaftsschnittstelle" gebildet ist, **dadurch gekennzeichnet, dass** es die automatischen Erkennungsmittel für die Natur der Module verwendet, sobald diese in den betreffenden Anschluss (A-B) eingefügt sind, dass es ein elektronisches Bauelement (ASIC) verwendet, das automatisch jedes Modul (A-B) erkennt, das in seinen Anschluss (A-B) eingefügt ist, wobei das elektronische Bauelement (ASIC) automatisch den für jedes der Module bestimmten Strom identifiziert und eine Prioritätenreihen-folge des Stromes festlegt, und dass es die Steuerungs-mittel für die Verteilung verwendet, die, falls erforderlich, den Strom (1) zu den Modulen (A-B) und im Inneren des Hosts (3) durch Ändern der Wegzuweisung des Stromes (1) in den Modulen abändert.
